# EUROPEAN PATENT SPECIFICATION

(11) **EP 1 895 400 B1**
(45) Date of publication and mention of the grant of the patent: **09.12.2015**
(21) Application number: 07009832.2
(22) Date of filing: 16.05.2007
(51) Int. Cl.: G06F 3/12

(54) **Information processor, print instruction method, and recording medium in which print instruction program is recorded**
Informationsprozessor, Druckanweisungsverfahren und Aufzeichnungsmedium, auf dem das Druckanweisungsprogramm aufgezeichnet ist
Processeur d'informations, procédé d'instructions d'impression, et support d'enregistrement dans lequel le programme d'instructions d'impression est enregistré

(30) Priority: 22.08.2006 JP 2006225337
(43) Date of publication of application: 05.03.2008
(73) Proprietor: Konica Minolta Business Technologies, Inc., Chiyoda-ku Tokyo 100-0005 (JP)
(72) Inventor: Tomita, Atsushi, Chiyoda-ku Tokyo 100-0005 (JP)
(74) Representative: Hoffmann Eitle

(56) References cited:
- CN-A- 1 501 243
- US-A1- 2003 063 309
- US-A1- 2006 033 952
- US-B1- 6 509 974
- US-B1- 6 674 540

## Description

### BACKGROUND OF THE INVENTION

### 1. Field of the Invention

The present invention relates to an information processor, which is connected to an image formation apparatus and provides a print instruction to the image formation apparatus. More specifically, the present invention relates to an information processor comprising the function of creating print data based upon a predetermined file in response to a drag-and-drop operation of a file icon corresponding to the file or a folder icon corresponding to a folder that stores the file onto a printer icon corresponding to the image formation apparatus.

### 2. Description of Related Art

As is well known, there have hitherto been a variety of techniques and methods where, in instruction to print a file such as a document file or an image file, the file is transmitted from an information processor to an image formation apparatus via a network to instruct the image formation apparatus to process the file. Generally adopted has been a technique where a printer driver activated on the information processor converts a drawing command, issued by an operating system or an application program of a host system, into a page description language processable by the image formation apparatus, and transmits a drawing command by means of the page description language to the image formation apparatus.

Further, it is known that, with significant improvement in performance of the information processor, a printer driver is used which develops a drawing command, issued by the operating system or the application program on the information processor side, into a bit map image and transmits the image to the image formation apparatus in an attempt to reduce processing time.

Further, there has recently been known an image formation apparatus equipped with the function (so called direct print function) of receiving a document file in a format such as PDF or TIFF as it is for processing even through the printer driver does not develop the document file into a drawing command by means of the page description language nor develop the drawing command into a bit map image. In this case, a print can be acquired by transmitting the document file from the information processor as it is to the image formation apparatus.

Meanwhile, as an operating method for providing an instruction to print a document file in the information processor, there has hitherto been generally used a method of opening a document file to be printed in an application capable of processing the file, and then providing an instruction to print the document file from the application. Further, for example, there has recently been known a technique of dragging and dropping a document icon corresponding to a document file to be printed onto a printer icon corresponding to a printer driver program on a user interface screen, thereby instructing to print the document file.

For example, Japanese Patent Laid-Open No. Hei 11-334180 discloses a technique where, when a document icon is dragged and dropped onto a printer icon, a printer optimum for printing the document file is automatically selected and an icon representing the selected printer is displayed on a user interface screen, to instruct printing. Further, for example, Japanese Patent Laid-Open No. 2001-337765 discloses a technique where a printer icon for which print conditions were previously set is displayed and an icon representing a file to be printed is dragged and dropped onto a desired printer icon to execute printing under the set conditions.

Further, Japanese Patent Laid-Open No. 2003-241931 discloses a technique where, when a document file is displayed in form of thumbnail and dragged onto a printer icon, a list of print setting previously registered into the printer icon is displayed, and the file is dragged and dropped onto a desired setting column to execute printing under that setting. Further, for example, Japanese Patent Laid-Open No. 2005-242661 discloses a technique where a monitoring application detects storage of a document file into a specific folder, determines the type of the document file, and activates an application being processible for the determined type, thereby to convert the document file into print data for transmission to the image formation apparatus.

Incidentally, there have been user needs for printing a plurality of files, such as a document file and an image file, as one print job when, for example, one booklet is created out of the plurality of files. In the foregoing conventional techniques, while a plurality of icons can be selected and then dragged and dropped in batches onto a printer icon to instruct to print a plurality of files at a time, a printed result shows separate processing of the files, such as provision of page numbers by file, and it has thus been impossible to instruct to print the files as one print job.

Further, considering the print order is not necessary in the conventional techniques where each file is separately treated, whereas the print order of each file is important in the case of instructing to print a plurality of different files as one print job. It is thereby desirable to allow setting of the print order of the plurality of files in an arbitrary and easy manner according to a creator's intention.

US 6,509,974 B1 discloses a system and method for providing production printing instructions for a printed end document to a job preparation station. The printed end document is made up of a plurality of other documents received from the customer which are to be inserted in a predefined order and in a predefined format. The job submission station includes a computer and a receiver which receives the plurality of documents in electronic format. An input device, such as a keyboard or a mouse, is used to provide the job submission station operator with the ability to provide input instructions to the computer. The operator uses the input device to arrange all of the documents into an electronic folder, such as a directory, and to arrange the documents in the order in which the documents are to be printed to compose the end document. The computer is programmed to automatically convert the document into a ready for printer format file and merged the plurality of documents together to create a single document. The computer also generates an electronic job ticket that provides global attributes for the printed end product.

### SUMMARY OF THE INVENTION

The present invention was made in view of the above technical problems.

According to a first aspect of the invention there is provided an information processor, which is connected to an image formation apparatus arranged to provide a print instruction to the image formation apparatus, and comprises the function of creating print data on a user interface screen based upon prescribed files in response to a drag and drop operation of a folder icon corresponding to a folder that stores the said files onto a printer icon corresponding to the image formation apparatus, characterized in that the information processor comprises a file manager arranged to manage, while ordering, a plurality of files based upon a prescribed order of the file icons inside a window of the folder; an attached file acquirer arranged to acquire a file attached to an e-mail in response to a drag and drop operation or a copy and paste operation of an e-mail icon corresponding to the e-mail onto the folder icon; a file memory arranged to store the file acquired by the attached file acquirer into the folder corresponding to the folder icon; and a print data creator arranged to create print data of the plurality of files as one print job in the print order corresponding to the order in which the files are managed by the file manager in response to the drag and drop operation of the folder icon onto the printer icon.

According to a second aspect of the invention there is provided a print instruction method for making an information processor, which is connected to an image formation apparatus, arranged to provide a print instruction to the image formation apparatus, and comprises the function of creating print data on a user interface screen based upon prescribed files in response to a drag and drop operation of a folder icon corresponding to a folder that stores the said files onto a printer icon corresponding to the image formation apparatus, execute the steps of managing, while ordering, a plurality of files based upon a prescribed order of the file icons inside a window of the folder; acquiring a file attached to an e-mail in response to a drag and drop operation or a copy and paste operation of an e-mail icon corresponding to the e-mail onto the folder icon; storing the said acquired file into the folder corresponding to the folder icon; and creating print data of the plurality of files as one print job in the print order corresponding to the order in which the files are managed in response to the drag and drop operation of the folder icon onto the printer icon.

According to a third aspect of the invention there is provided a computer-readable recording medium in which a print instruction program is recorded, the program arranged to make an information processor, which is connected to an image formation apparatus, provide a print instruction to the image formation apparatus, and comprises the function of creating print data on a user interface screen based upon prescribed files in response to a drag and drop operation of a folder icon corresponding to a folder that stores the file onto a printer icon corresponding to the image formation apparatus, execute the procedures of managing, while ordering, the files based upon a prescribed order of the file icons inside a window of the folder; acquiring a file attached to an e-mail in response to a drag and drop operation or a copy and paste operation of an e-mail icon corresponding to the e-mail onto the folder icon; storing the said acquired file into the folder corresponding to the folder icon; and creating print data of the plurality of files as one print job in the print order corresponding to the order in which the files are managed in response to the drag and drop operation of the folder icon onto the printer icon.

### BRIEF DESCRIPTION OF THE DRAWINGS

FIG. 1 is a view showing a print system according to an embodiment of the present invention.
FIG. 2 is a block diagram showing a basic configuration of an information processor (PC) included in the print system.
FIG. 3 is a flowchart of an entire process which is started in response to turning-on of the power or the like.
FIG. 4 is a view showing one example of user interface screens which is displayed on a monitor of the information processor and on which a window of a batch print operation folder is displayed.
FIG. 5 is a view showing one example of user interface screens in a state where one document icon is displayed inside the window of the batch print operation folder.
FIG. 6 is a view showing one example of user interface screens representing a mode in which arrangement of one of a plurality of document icons is changed inside the window of the batch print operation folder.
FIG. 7 is a view showing one example of user interface screens in a state where a pop-up menu including a plurality of items is displayed inside the window of the batch print operation folder.
FIG. 8 is a view showing one example of user interface screens in a state where a drag-and-drop operation of an operation folder icon onto a printer icon has been performed.
FIG. 9 is a flowchart of a process in response to an icon drop (step #14 in FIG. 3).
FIG. 10 is a flowchart of a menu item executing process (step #18 in FIG. 3).
FIG. 11 is a flowchart of a print condition setting process (step #45 in FIG. 10).
FIG. 12 is a view showing one example of print condition setting dialogs.
FIG. 13 is a view showing one example of a user interface screen representing a state after a display pattern of document icons has been updated.
FIG. 14 is a flowchart of a white paper insertion process (step #46 in FIG. 10).
FIG. 15 is a view showing one example of user interface screens in a state where a white paper insertion icon has been created.
FIG. 16 is one example of file management tables.
FIG. 17 is a flowchart of a child folder creating process (step #47 in FIG. 10).
FIG. 18 is a view showing one example of child folder setting dialogs.
FIG. 19 is a view showing one example of user interface screens in a state where a plurality of child folders are created inside the window W of the batch print operation folder.
FIG. 20 is one example of folder management tables.
FIG. 21 is a flowchart of a deleting process (step #48 in FIG. 10).
FIG. 22 is a flowchart of a process for classifying and storing document files (step #38 in FIG. 9).
FIG. 23 is one example of file management tables for batch management of files stored inside the window of the batch print operation folder, including document files included in the child folders.
FIG. 24 is a flowchart of a print request process (step #20 in FIG. 3).

### DESCRIPTION OF THE PREFERRED EMBODIMENTS

In the following, an embodiment of the present invention is described with reference to attached drawings.

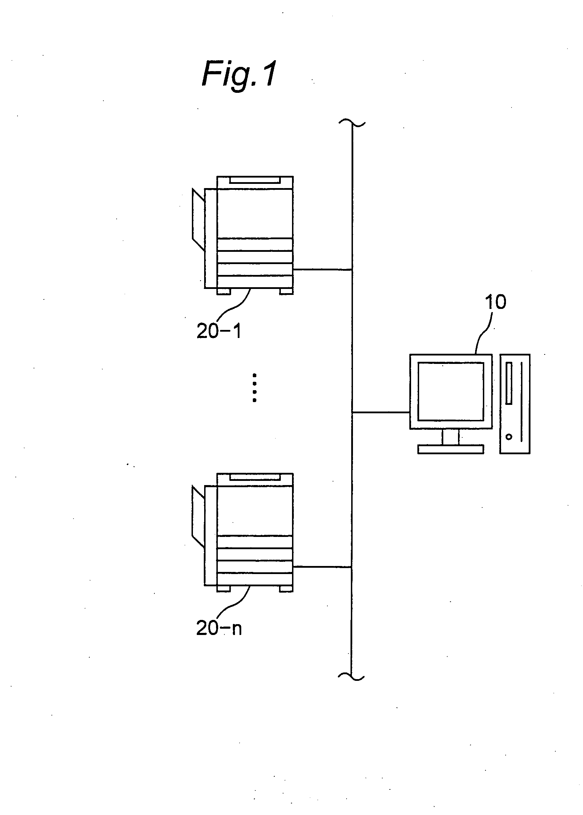

FIG. 1 is a view showing a print system which includes an information processor (hereinafter referred to as PC) and an image formation apparatus according to an embodiment of the present invention. This print system 1 has a PC 10, and a plurality of image formation apparatuses 20-1, ..., 20-n, and these components are data-transmittably/receivably connected to each other via a network 15. As the network 15, any of a network using a dedicated line such as a LAN (local area network), a network using a common line, and a network by wireless communication may be adopted.

The PC 10 is comprised of a general purpose computer, which creates a file to be printed according to a user instruction and transmits the file to any of the image formation apparatuses 20-1, ..., 20-n. Here, the file to be printed may be a drawing command obtained by converting a drawing command issued by an operating system (hereinafter referred to as OS) or an application program in the PC 10 into a page description language processable on the side of the image formation apparatuses 20-1, ..., 20-n, or a bit map data obtained by developing the drawing command issued by the OS or the application program into a bit map image. The file to be printed may also be a file in the format of PDF, TIFF or the like.

Meanwhile, the image formation apparatuses 20-1, ..., 20-n are comprised of general purpose printers or a complex apparatus having a plurality of functions such as a printer function, a facsimile function, a copy function, a scanner function, and the like, and create an image on a print medium such as paper based upon the image files acquired by scanning a script or the file to be printed which has been transmitted from the PC 10 via the network 15.

Further, although not shown, the print system 1 may be connected to the internet. In this case, for example, the image formation apparatuses 20-1, ..., 20-n can transmit image files acquired by scanning a script to a remote PC via the internet, or receive the file from the remote PC via the internet, to output a print based upon the file.

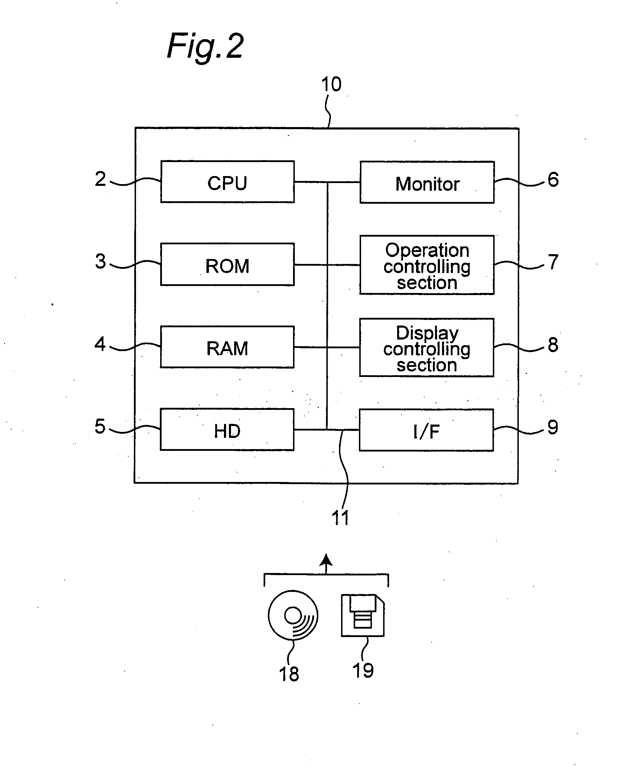

FIG. 2 is a block diagram showing a basic configuration of the PC 10. The PC 10 has: a CPU 2 for controlling each of components inside the PC 10 based upon a program of an OS as a basic software, and the like; a ROM 3 in which a program to be executed at the time of activation of the PC 10 and the like are recorded, the RAM 4 used as a buffer area of a work area which is needed for execution of the program; the hard disc (" HD" in the figure) 5 in which data of the OS or the application program or a plurality of types of data are stored; a monitor 6 for visually displaying a variety of information; a operation controlling section 7 for detecting an input operation by the user via an input device such as a keyboard or a mouse to execute control according to the input operation; a display controlling section 8 for controlling displays of a variety of information on the monitor 6, and an interface section (" I/F" in the figure) 9 for transmitting and receiving a variety of data to and from an external apparatus including the image formation apparatus such as a printer and an MFP. These components are data-transmittably/receivably connected to each other via a bus 11.

Further, although not shown, the PC 10 for example has components such as an optical disc drive capable of reading from and writing into a CD or a DVD, a floppy (registered trademark) disc drive, or an input device such as a keyboard or a mouse.

In this PC 10, each of a variety of files such as document files and image files are stored into prescribed directories (hereinafter referred to as folders) defined by the hard disc 5, and file icons corresponding to the files and folder icons corresponding to the folders that store the files are displayed on the monitor 6 along with the names thereof. The user can select the file icon or the folder icon with one click with the use of the input device such as the keyboard or the mouse, open the icon with a double click, or drag-and-drop the icon so as to be stored into another folder. It is to be noted that such a specification is conventionally known in terms of general purpose OSs such as Windows and Mac OS.

Further, in the PC 10, the OS provides a variety of functions such as a display on a user interface screen displayed on the monitor 6 and storage of a document file. The OS has a plurality of device drivers in software form capable of controlling a prescribed hardware independently of the kernel as a core section of the OS. As one of the device drivers, a printer driver program (hereinafter referred to as printer driver) is installed which recognizes a printer being an output destination and is capable of setting a variety of print conditions and controlling the printer. The printer driver is installed into the PC 10 typically by an external recording medium such as an optical disc 18 like a CD-ROM or a DVD-ROM or a floppy disc 19 (see FIG. 2) which is packed together with a printer body at the time of sale thereof.

In the PC 10, based upon the function of this printer driver, a file icon corresponding to a prescribed file or a folder icon corresponding to a folder that stores the file is dragged and dropped onto any of the image formation apparatuses 20-1, ..., 20-n, and according to this, printing having been instructed is executed in the image formation apparatus corresponding to the printer icon onto which the file icon or the folder icon has been dragged and dropped. While such a print instructing function is conventionally known, in the present embodiment, in response to a drag-and-drop operation of one folder icon onto the printer icon, print data is created as one printer job out of a plurality of files when the files are stored inside a folder corresponding to the folder icon and a print instruction is provided to an image formation apparatus corresponding to the printer icon onto which the folder icon has been dragged and dropped. It is to be noted that a folder in which a plurality of files to be printed in batches is hereinafter referred to as " batch print operation folder".

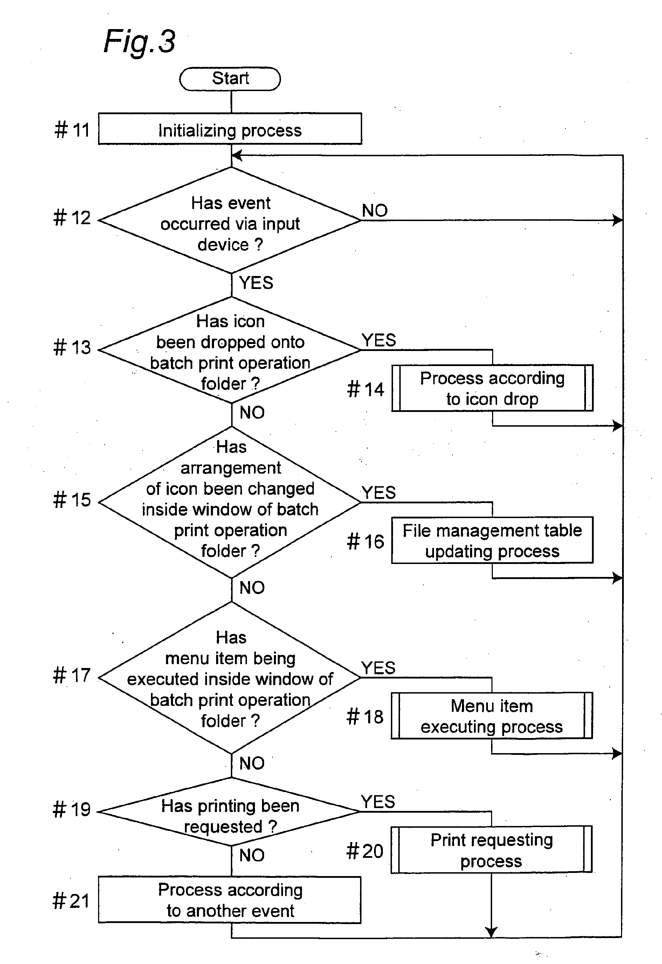

Processes to be executed in the PC 10 in association with the foregoing print instructing function are specifically described. FIG. 3 is a flowchart of an entire process which is started in response to turning-on of the power or the like in the PC 10. In this process, first, a typical initializing process is performed which includes clearing a memory such as the RAM 4, setting a standard mode, activating an operating system, and the like (#11).

Subsequently, it is determined whether or not an event occurs based upon a user instruction via the input device such as the keyboard or the mouse (#12). When it is determined that the event has not occurred, the step #12 is repeatedly performed. On the other hand, when it is determined that the event has occurred, it is then determined whether or not an icon (hereinafter referred to as document icon) corresponding to a document file is dragged and dropped (icon-dropped) onto the batch print operation folder icon on the user interface screen displayed on the monitor 6 of the PC 10 as contents of the event (#13).

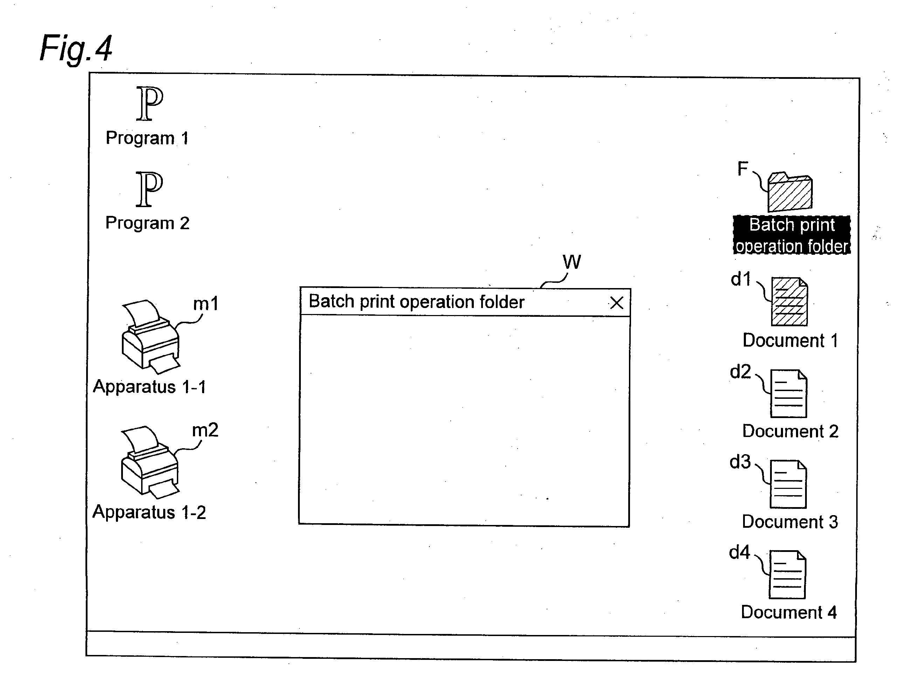

As shown in FIG. 4, an icon (hereinafter referred to as operation folder icon) F corresponding to the batch print operation folder is present on the user interface screen displayed on the monitor 6 of the PC 10. Further, document icons d1, d2, d3, d4, respectively provided with file names " Document 1", " Document 2" , Document 3" and " Document 4", and printer icons m1, m2 respectively corresponding to the image formation apparatus 20-1 and the image formation apparatus 20-2 are present. For example, when a cursor is positioned on the operation folder icon F and then double-clicked via the input device such as the keyboard or the mouse, the batch print operation folder is opened, and a window W appears which corresponds to the batch print operation folder on the user interface screen.

It is to be noted that the position of the batch print operation folder is not limited to the user interface screen which is the backmost surface of the window, but may be the inside of the folder set in an arbitrarily place inside the PC 10. Further, the means of opening the batch print operation folder is not limited to double-clicking. For example, the cursor is positioned on the operation folder icon F and single-clicked to select the operation folder icon F, and then another operation such as pushing down a return key on the key board may be adopted.

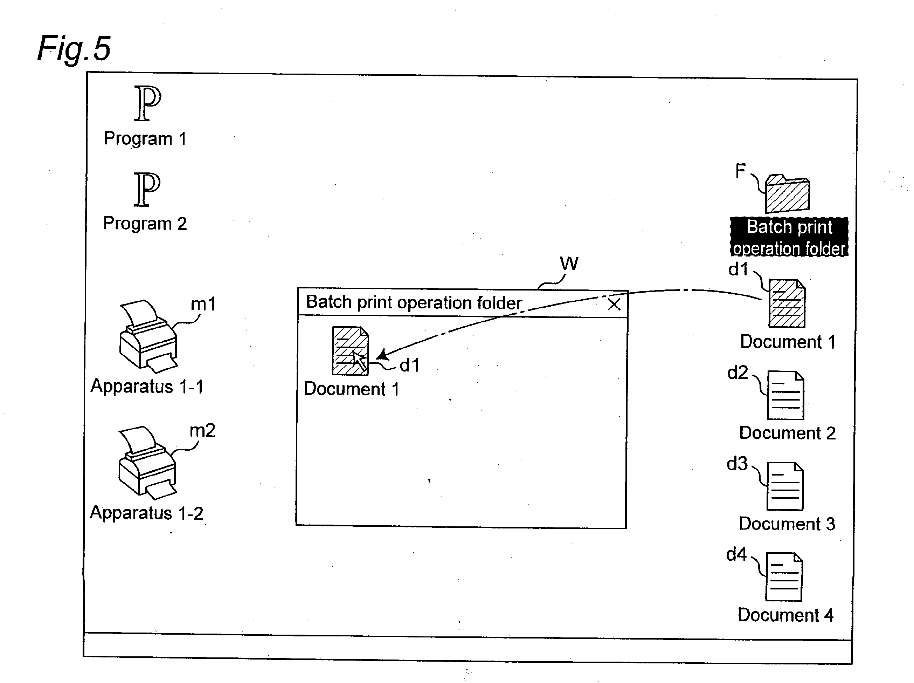

When the document icons d1, d2, d3, d4 present on the user interface screen are for example dragged an dropped into the window W, the document icons d1, d2, d3, d4 are displayed inside the window W of the batch print operation folder. Further, simultaneously, the document files corresponding to the document icons d1, d2, d3, d4 are stored into the batch print operation folder. FIG. 5 shows a state where the document icon d1 corresponding to the file provided with the file name " Document 1" is displayed inside the window W of the batch print operation folder. In the step #13, in the above manner, it is determined that the document icon is dropped onto the operation folder icon when a new file is stored into the batch print operation folder.

While details are described later, in the present embodiment, the files stored inside the batch print operation folder are managed in batches by adopting a table (hereinafter referred to as a file management table) previously set in the PC 10 for the purpose of managing those files. Further, the document file is not necessarily displayed on the user interface screen being the backmost surface of the window displayed on the monitor 6, but may be stored inside the folder set inside an arbitrary place inside the PC 10. Further, the document icon may be shifted into the window W of the batch print operation folder not necessarily by the drag-and-drop operation but by a copy and paste operation. Further, the operation is not limited to the above operations. The document icon may be dragged and dropped or copied and pasted onto the operation folder icon F.

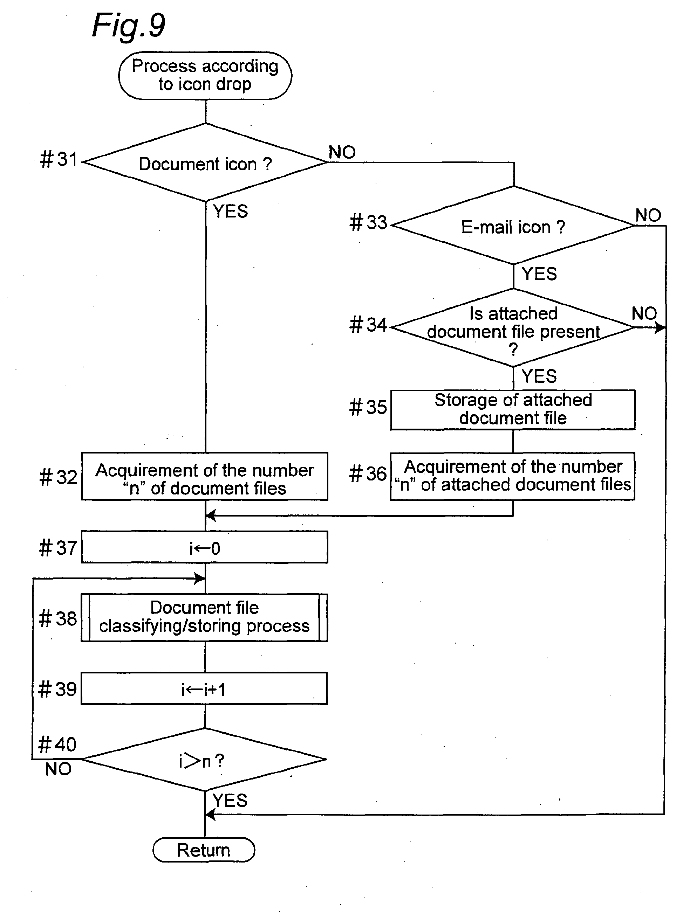

As a result of the step #13, when the contents of the event is icon drop of the document icons d1, d2, d3, d4 onto the operation folder icon F, a process according to the icon drop is performed (#14). Thereafter, the process is returned to the step #12. It is to be noted that the detail of the " process according to the icon drop" in the step #14 is described later with reference to FIG. 9. On the other hand, as a result of the step #13, when the contents of the event is determined to be not the icon drop of the document icons d1, d2, d3, d4 onto the operation folder icon F, it is then determined whether or not the contents of the event is a change in arrangement of the icons inside the window W of the batch print operation folder (#15).

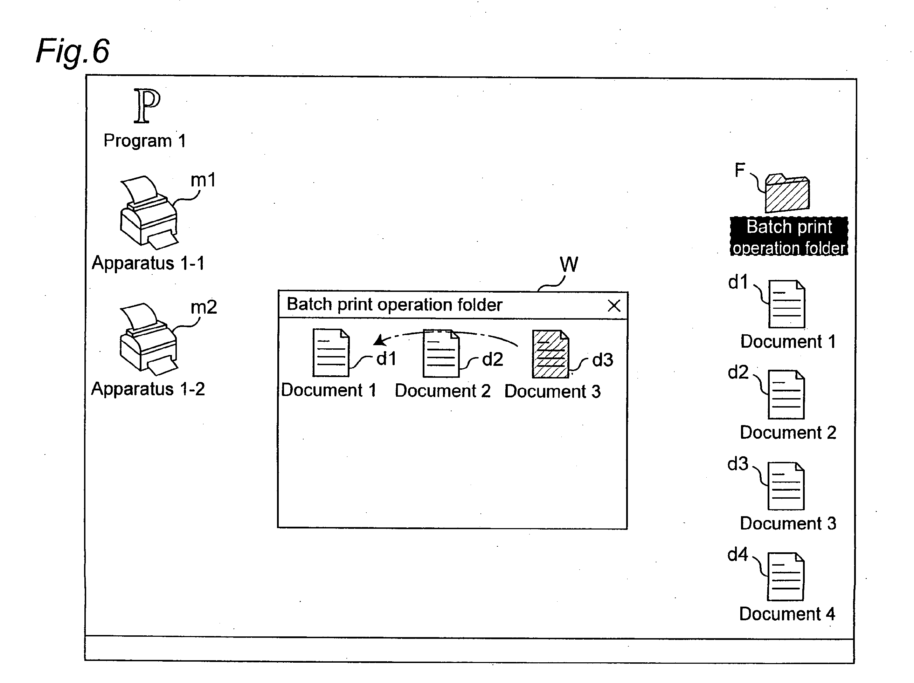

In a state shown in FIG. 6, the document icons d1, d2, d3 respectively provided with the file names " Document 1" , " Document 2" , " Document 3" are arranged in the order from the left. From this state, a drag-and-drop operation of the document icon d3 is performed such that the document icon d3 is positioned in between the document icon d1 and the document icon d2 (see the dashed line arrow), thereby to change the arrangement of the document icon d3. In the step #15, when the arrangement of the icons are changed inside the batch print operation folder as thus described, the contents of the event is determined to be the change in arrangement of the icons.

As a result of the step #15, when the contents of the event is determined to be the change in arrangement of the icons inside the window W of the batch print operation folder, the file management table as described above is updated according to the arrangement order of the icon inside the window W of the batch print operation folder (#16). In the present embodiment, the files stored inside the batch print operation folder are managed in batches while being ordered based upon the arrangement order of the icons inside the window W of the batch print operation folder on the file management table. In the step #16, first, the arrangement order of icons are determined in Z-order from the upper left to the lower right inside the window W according to the change in arrangement of the icons, and then the files are reordered on the file management table so as to be arranged from the top to the bottom according to the newly determined arrangement order of the icons. Thereby, the information of the file corresponding to the icon on the upper left inside the window W of the batch print operation folder is positioned at the top of the file management table. On the contrary, the information of the file corresponding to the lower right inside the window W is positioned at the bottom of the file management table. After the step #16, the process is returned to the step #12.

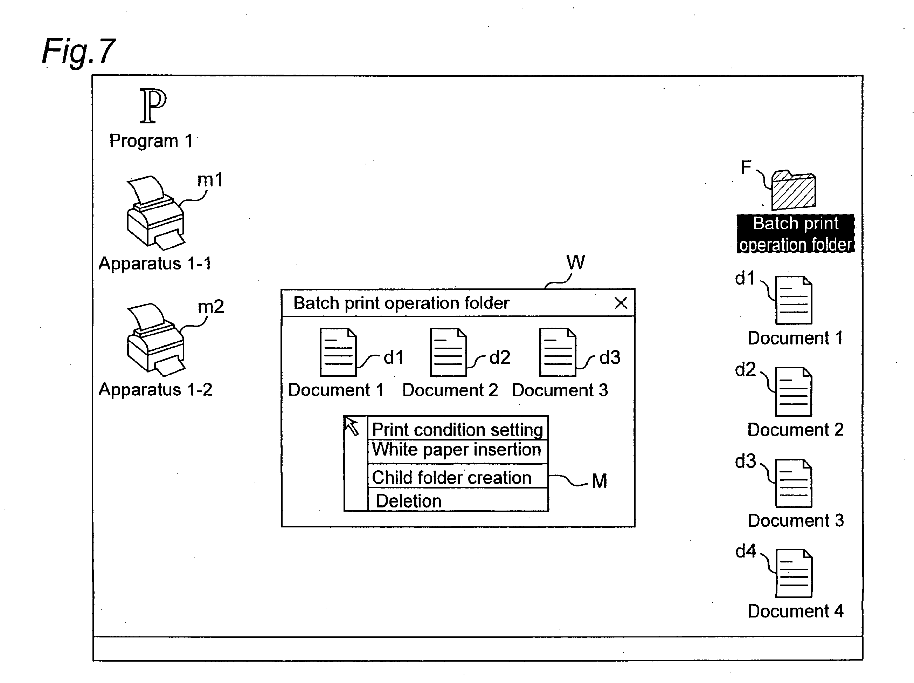

On the other hand, when the contents of the event is determined not to be the change in arrangement of the icons inside the operation folder as a result of the step #15, it is then determined whether or not the contents of the event is execution of a menu inside the batch print operation folder (#17). As shown in FIG. 7, for example when a cursor is positioned inside the window W of the batch print operation folder and then right-clicked with the use of a mouse, a pop up menu M is displayed which includes items " Print condition setting" , " White paper insertion" , " Child folder creation" , and " Deletion" . When one item is selected out of the plurality of items, the selected item is executed.

" Print condition setting" is an item for executing a process to set print conditions for each of the files stored in the batch print operation folder. " White paper insertion" is an item for executing a process to create, inside the window W of the batch print operation folder, a white paper insertion icon for inserting white paper into between print results of the files which are outputted on the image formation apparatus side. It is to be noted that the white paper to be inserted into between the print results of the files which are outputted on the image formation apparatus side is not limited to the same paper as that of the print results, and another type of paper such as index paper may be adopted.

" Child folder creation" is an item for executing a process to create a child folder dependent upon the batch print operation folder. " Deletion" is an item for executing a process to delete a file once stored in the batch print operation folder in a case, for example, where a file not to be printed is stored into the batch print operation folder by error, or the file not needed printing is included in files attached to an e-mail, or in some other case.

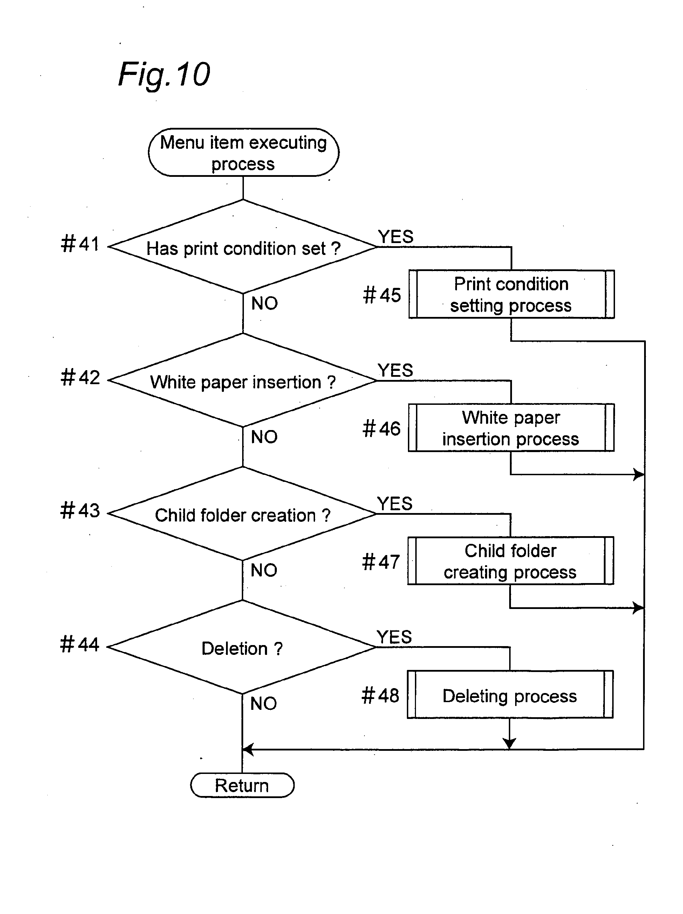

As a result of the step #17, when the contents of the event is determined to be execution of the menu item inside the window W of the batch print operation folder, a menu item executing process is performed (#18). Thereafter, the process is returned to the step #12. It is to be noted that the detail of the " menu item executing process" is described later with reference to FIG. 10.

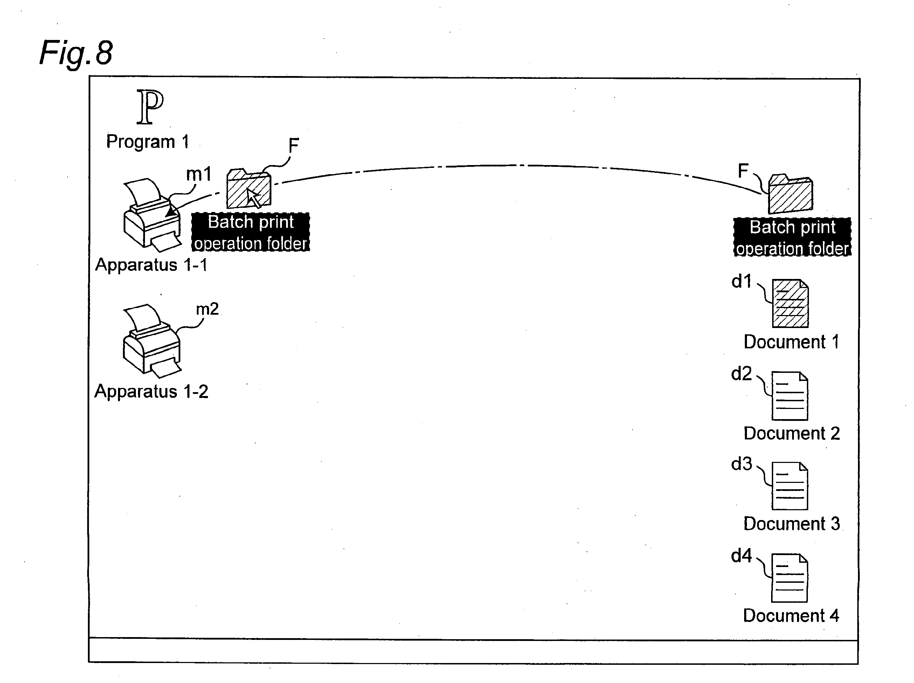

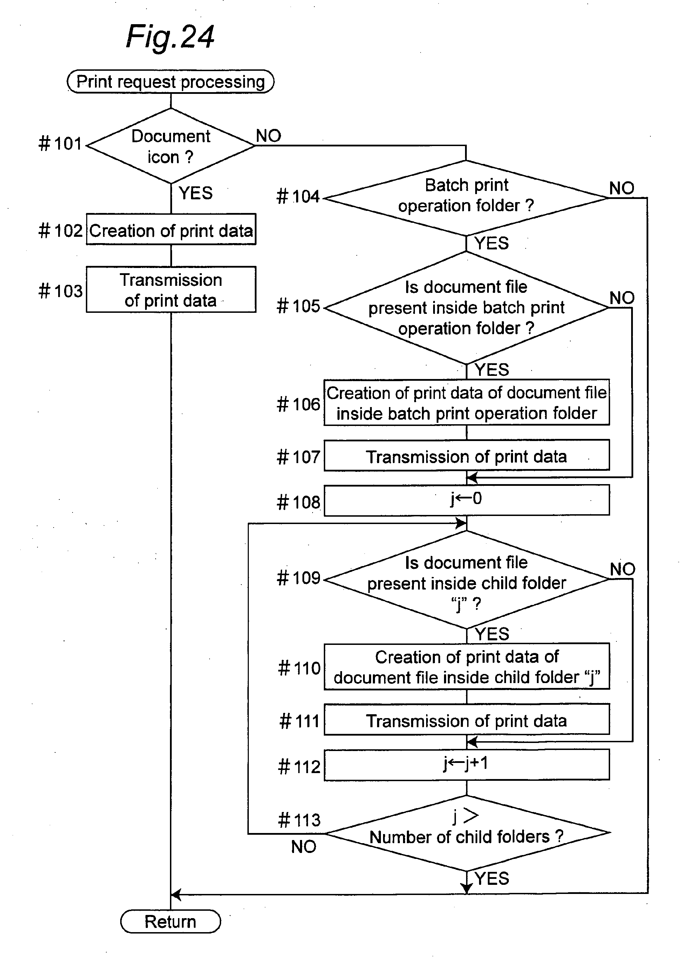

On the other hand, when the contents of the event is determined not to be execution of the menu item inside the window W of the batch print operation folder as a result of the step #17, it is then determined whether or not the contents of the event is a print request (#19). Specifically, when a drag-and-drop operation of the operation folder icon F onto the printer icon m1 or m2 as shown in FIG. 8 is detected, it is determined that the print request has been made. Further, although not particularly shown, also when the document icons d1, d2, d3, d4 are directly dragged and dropped onto the printer icon m1 or m2, it is determined as above that the print request has been made of the image formation apparatus corresponding to the printer icon m1 or m2. As a result, when it is determined that the print request has been made, a print request process is performed (#20). Thereafter, the process is returned to the step #12. It is to be noted that the detail of the " process at the time of print request" is described later with reference to FIG. 24.

On the other hand, when it is determined that the print request has not been made as a result of the step #20, a process according to another event is subsequently performed (#21). Thereafter, the process is returned to the step #12.

Next, a process according to an icon drop (step #14 in FIG. 3) is described with reference to a flowchart of FIG. 9. In this process, first, it is determined whether or not an icon dropped into the batch print operation folder is a document icon (#31). In the PC 10, extensions for document files are previously registered, and whether or not the icon is the document icon is determined based upon an extension provided to a file name of a file corresponding to the dropped icon. For example, extensions "doc", " txt", " pdf", "tif" and the like are extensions provided to file names of document files. When the dropped icon is determined to be the document icon as a result of the step #31, the number " n" of document files is acquired based upon the number of document icons (#32). Thereafter, the process proceeds to a step #37.

On the other hand, when the icon dropped into the batch print operation folder is determined not be the document icon as a result of the step #31, it is then determined whether or not the dropped icon is an e-mail icon (#33). Specifically, as in the case of the determination process concerning the document icon, extensions for e-mail files are previously determined, and based upon an extension provided to a file name of a file corresponding to the dropped icon, it is determined whether or not the dropped icon is the e-mail icon. For example, " eml" etc. adopted in Outlook Express is an extension provided to the file name of the e-mail file.

When the dropped icon is determined not to be the e-mail icon as a result of the step #33, the process is returned to the flow shown in FIG. 3. On the other hand, when the dropped icon is determined to be the e-mail icon, it is then determined whether or not a document file attached to the e-mail (attached document file) is present (#34).

For example, in the internet mail, one attached document file is parted by " --Boundary" inside a message. " --Boundary" is a letter string defined by a counter-type field of the header part. Therefore, the PC 10 can acquire a document file attached to the mail by detecting " --Boundary" inside the message.

When no attached document file is determined to be present as a result of the step #34, the process returned to the flow shown in FIG. 3. On the other hand, when the attached document file is determined to be present, the attached document file is stored (#35), and the number" n" of attached document files is acquired (#36). Thereafter, the process proceeds to the step #37.

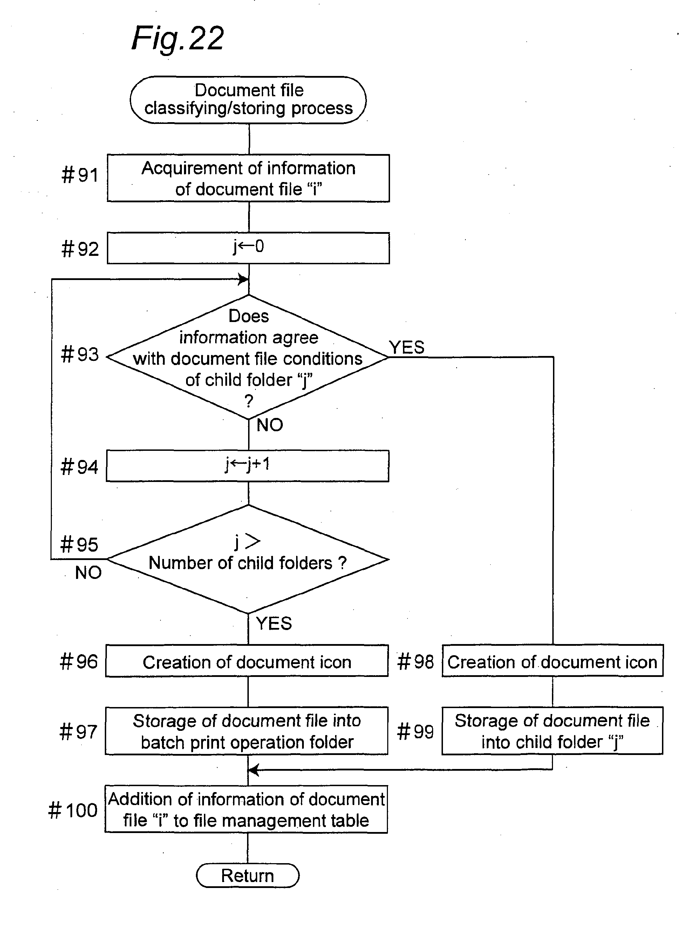

In steps #37 to #40, processes are performed in which document files corresponding to document files dropped into the batch print operation folder or document files attached to an e-mail are stored by ones into the batch print operation folder. Specifically, first, a document file number "i" (1 ≦ i≦ document files in a total number of "n") is reset to 0 (#37), and then a classification storage process is performed in which the document file with the document file number " i" is classified by file conditions including vertical writing or horizontal writing, and a word processor file, a spreadsheet file or a pdf file (#38). The detail of the document file classification storage process is described later with reference to FIG. 22.

After the step #38, 1 is added to the document file number " i" (#39) in order to classify and store the remaining document files, and it is further determined whether or not " i" after the addition exceeds " n" (#40). As a result, when " i" after the addition is determined to be not larger than " n" , the process returns to the step #38 for classification and storage of the remaining document files, and the subsequent steps are repeated. On the other hand, when " i" after the addition is determined to exceed " n" , it means that the document files in a total number of "n" have all been classified and stored into the batch print operation folder. The process is then retuned to the flow shown in FIG. 3.

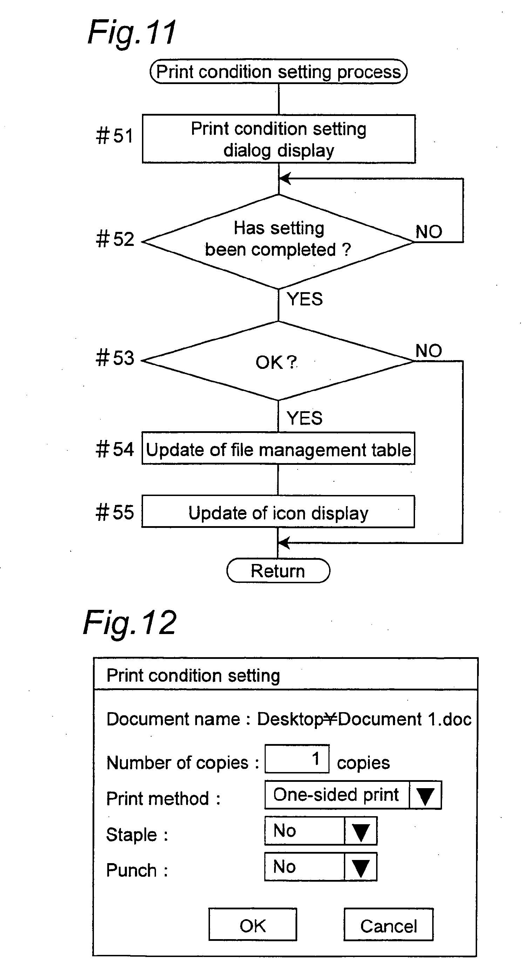

Subsequently, a menu item execution process (step #18 in FIG. 3) is described with reference to the flowchart shown in FIG. 10. In this process, first, it is determined whether or not a menu item selected in the pop-up menu shown in FIG. 7 is the " print condition setting process" (#41). When the selected menu item is determined to be the " print condition setting process" , the print condition setting process is executed (#45). After the step #45, the process is returned to the flow shown in FIG. 3. It should be noted that the detail of the " print condition setting process" is described later with reference to FIG. 11.

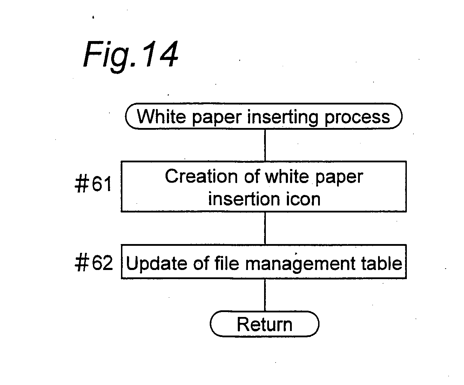

On the other hand, when the selected menu item is determined not to be the " print condition setting process" as a result of step #41, it is then determined whether or not the selected menu item in the pop-up menu shown in FIG. 7 is the " white paper insertion process" (#42). When the item is determined to be the " white paper insertion process" , the white paper insertion process is executed (#46). After the step #46, the process is returned to the flow shown in FIG. 3. It should be noted that the detail of the " white paper insertion process" is described later with reference to FIG. 14.

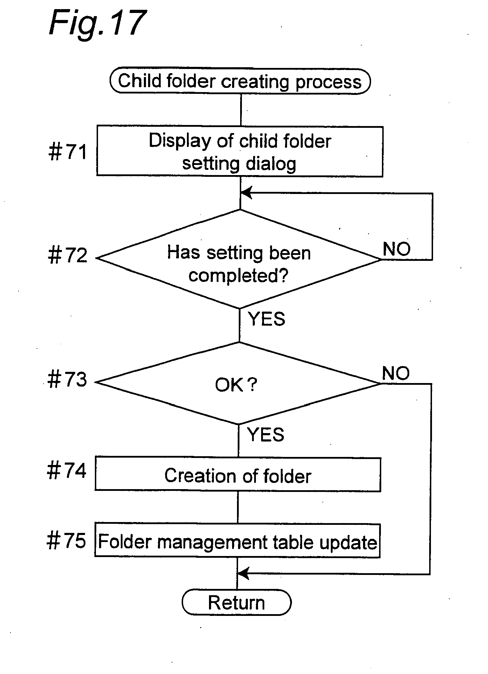

When the selected menu item selected in FIG. 7 is determined not to be the " white paper insertion process" as a result of the step #42, it is then determined whether or not the menu item selected in the pop-up menu shown in FIG. 7 is the " child folder creation process" (#43). When the item is determined to be the " child folder creation process", the child folder creation process is executed (#47). After the step #47, the process is returned to the flow shown in FIG. 3. It should be noted that the detail of the " child folder creation process" is described later with reference to FIG. 17.

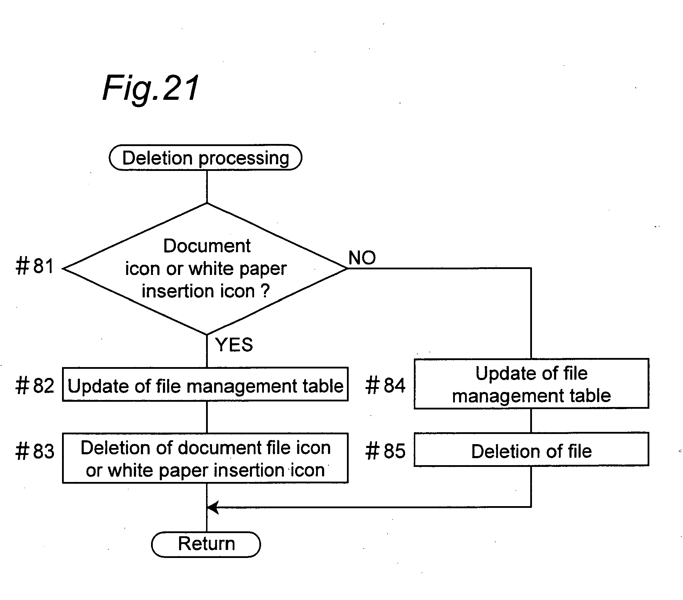

On the other hand, when the menu item selected in the pop-up menu shown in FIG. 7 is determined not to be the " child folder creation process" , it is then determined whether or not the selected menu item is the " deletion process" (#44). As a result, when the item is determined to be the " deletion process" , the deletion process is executed (#48). It should be noted that the detail of the " deletion process" is described later with reference to FIG. 21. After the step #48, the process is returned to the flow in FIG. 3. On the other hand, when the item is determined not to be the " deletion process" as a result of the step #44, the process is immediately returned to the flow shown in FIG. 3.

Next, the print condition setting process (step #45 in FIG. 10) is described with reference to the flowchart of FIG. 11. In this process, first, a print condition setting dialog is displayed on the user interface screen (#51). FIG. 12 shows one example of print condition setting dialogs. This print condition setting dialog includes as print conditions (mainly conditions concerning print finishing) arbitrarily settable by the user, along with " Document name" representing the name of a document file, " Number of copies" capable of setting the number of printed copies, " Print method" capable of setting a single-sided or double-sided printing, " Staple" capable of setting the necessity/unnecessity of a staple, and " Punch" capable of setting the necessity/unnecessity of a punch. Further, other than the above items, an " OK" button and a "Cancel" button are set in the print condition setting dialog.

After the step #51, the " OK" button or the " Cancel" button is pressed down, and it is thereby determined whether or not setting concerning the item in the print condition setting dialog has been completed (#52). As a result, when it is determined that the " OK" button or the " Cancel" button has not been pushed down and the setting has not been completed, the step #52 is repeated. On the other hand, when it is determined that the setting has been completed, it is then determined whether or not the " OK" button has been pressed down (#53).

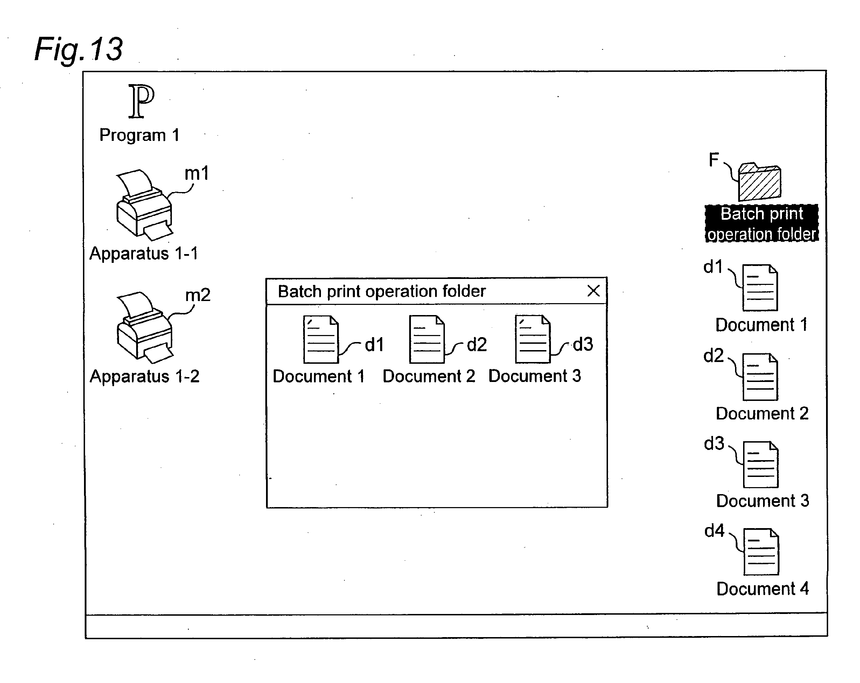

As a result of the step #53, when it is determined that the " OK" button has not been pressed down, namely the " Cancel" button has been pressed down, the process is immediately returned to the flow shown in FIG. 10. On the other hand, when it is determined that the " OK" button has been pressed down, the file management table is then updated (#54). Further, according to the contents of the file management table after the update, a display pattern of document icons included in the batch print operation folder is updated (#55). FIG. 13 is a view showing one example of user interface screens representing a state after a display pattern of document icons has been updated. Specifically, here, document icons corresponding to " Document 1" and " Document 2" are updated to ones added with a staple mark according to setting of the necessity of a stable for the " Document 1" and the " Document 2" in the dialog as shown in FIG 12 and subsequent update of the file management table. After the step #55, the process is returned to the flow shown in FIG. 10.

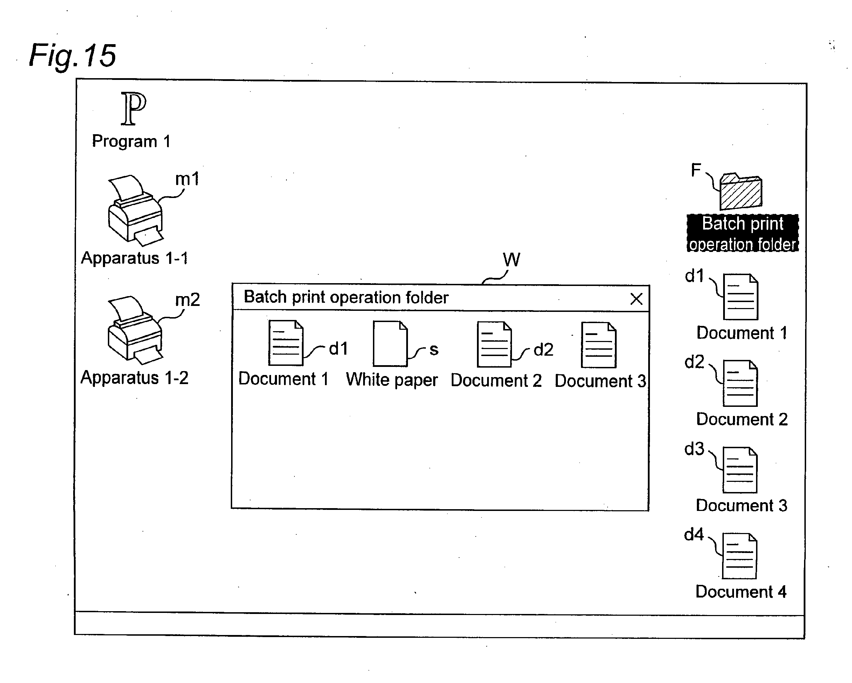

Further, the white paper insertion process (step #46 in FIG. 10) is described with reference to the flowchart of FIG. 14. In this process, first, a white paper insertion icon is created (#61). FIG. 15 is a view showing one example of user interface screens in a state where a white paper insertion icon "s" has been created. In this example, the white paper insertion icon "s" corresponding to " White paper" has been inserted into between a document icon corresponding to the " Document 1" and a document icon corresponding to the " Document 3". In this case, a print result is obtained in which white paper is inserted into between a printed copy corresponding to a document file " Document 1" and a printed copy corresponding to a document file " Document 3" . It is to be noted that a change in arrangement of the white paper insertion icon " s" is arbitrarily executable by the user by a drag-and-drop operation.

After the step #61, the file management table is updated according to the creation of the white paper insertion icon " s" (#62). The process is then returned to the flow shown in FIG. 10. As described above, information of files stored inside the batch print operation folder are managed by the file management table set inside the PC 10. In the present embodiment, when the white paper insertion icon " s" is created inside the batch print operation folder, a " White paper file" corresponding to the white paper insertion icon " s" is virtually set, and this white paper file is also managed by the file management table as are files stored inside the batch print operation folder. Namely, in the file management table, as in the case of the document files, white paper files are managed in batches while being ordered based upon the arrangement order of icons inside the window W of the batch print operation folder.

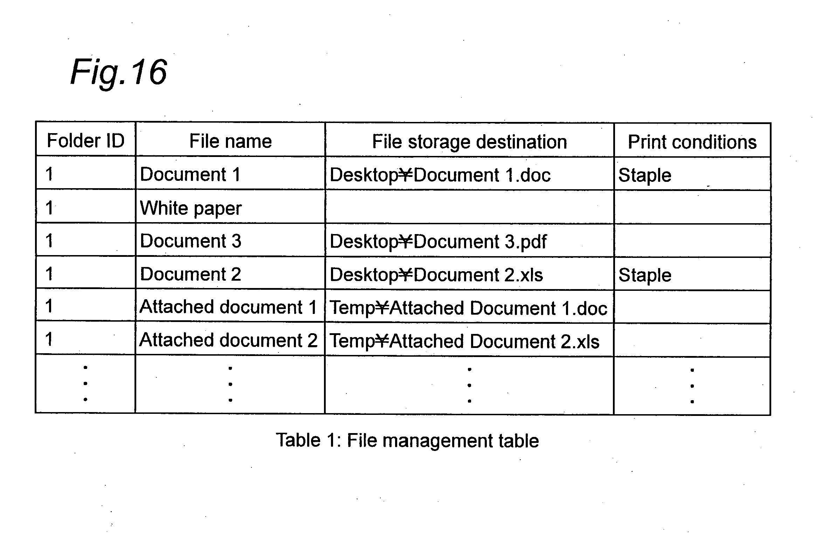

FIG. 16 shows one example of such a file management table. In this file management table, document files, attached document files each acquired from an e-mail, and while paper files are managed in batches, and information concerning " Folder ID" , "File name" , " File storage destination" , and " Print conditions" is held for each of the files. Here, " Folder ID" is a value for identifying the batch print operation folder in the PC 10. Further, "Print conditions" is information which reflects contents of setting in the print condition setting dialog shown in FIG. 12. When any piece of information is changed according to an operation by the user, or when a document file icon or a white paper insertion icon is newly created, deleted or changed in its arrangement inside the window W of the batch print operation folder, the file management table is updated.

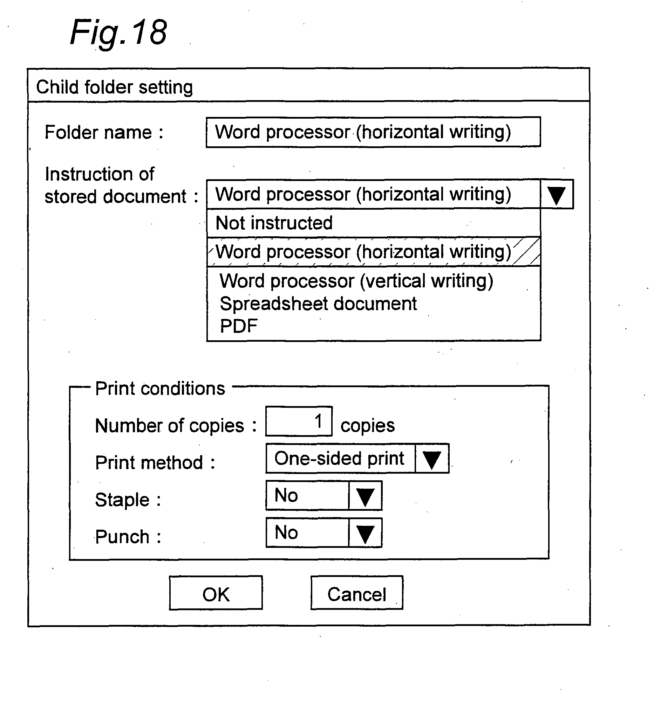

Subsequently, the child folder creation process (step #47 in FIG. 10) is described with reference to the flowchart in FIG. 17. In this process, first, the child folder setting dialog is displayed (#71). FIG. 18 shows one example of child folder setting dialogs. This child folder setting dialog includes as items arbitrarily settable by the user in order to determine document file conditions, along with " Folder name" representing a name of a child folder, " Stored document specification" capable of setting a type of a document file to be stored into the child folder ("Not instructed", "Word processor (horizontal writing)" " Word processor (vertical writing)", "Spreadsheet document", "PDF"); and items concerning print conditions (finish conditions) consisting of: " Number of copies" capable of setting the number of printed copies; "Print method" capable of setting a single-sided or double-sided print pattern; " Staple" capable of setting the necessity/unnecessity of a staple; and " Punch" capable of setting the necessity/unnecessity of a punch. Further, other than the above items, an " OK" button and a " Cancel" button are set in the child folder setting dialog. It is to be noted that the items concerning the print conditions in the child folder setting dialog are not limited to the above items, and location of the staple or the punch may be made settable.

After the step #71, the " OK" button or the " Cancel" button is pressed down, and it is thereby determined whether or not setting concerning the items in the child folder setting dialog has been completed (#72). When it is determined that the " OK" button or the " Cancel" button has not been pushed down and the setting has not been completed, the step #72 is repeated. On the other hand, when the setting is determined to have been completed, it is then determined whether or not the " OK" button has been pressed down (#73).

As a result of the step #73, when it is determined that the " OK" button has not been pressed down, namely the " Cancel" button has been pressed down, the process is immediately returned to the flow shown in FIG. 10. On the other hand, when it is determined that the " OK" button has been pressed down, a child folder dependent upon the batch print operation folder is created (#74). Subsequently, a table (folder management table) previously set in the PC 10 for managing the batch print operation folder and the child folder dependant thereupon is updated (#75).

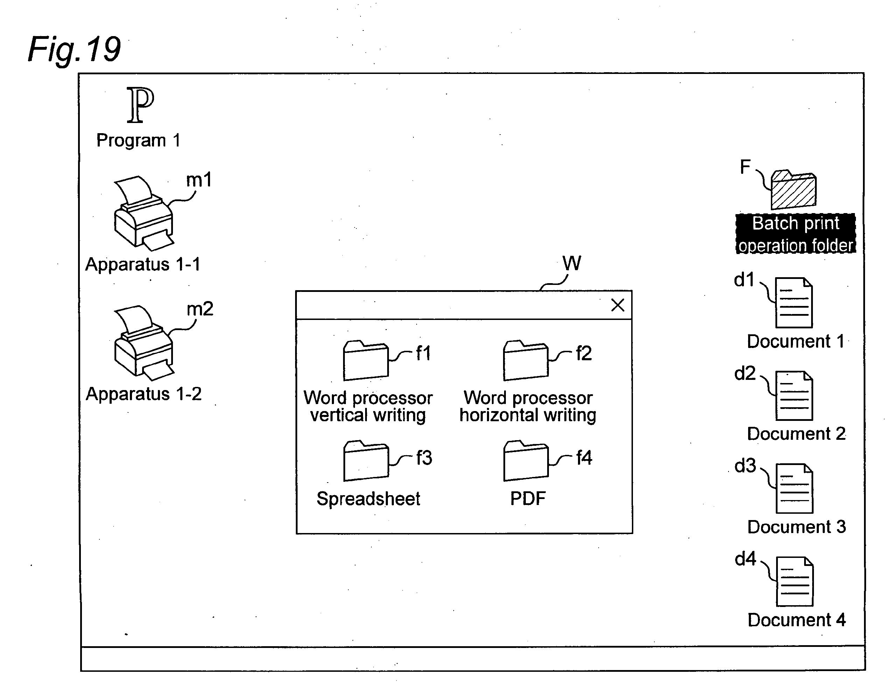

FIG. 19 is a view showing one example of user interface screens in a state where a plurality of child folders are created in the window W of the batch print operation folder. As shown in this figure, when creating a child folder is instructed in the window W of the batch print operation folder, a child folder is created, and a child folder icon is simultaneously displayed. In this example, four child folders respectively provided with names " Word processor horizontal writing" " Word processor vertical writing", "Spreadsheet", and "PDF" are created. In these child folders, document files with different document file conditions such as " Not instructed", "Word processor (horizontal writing)" , " Word processor (vertical writing)", "Spread sheet document" and " PDF" are stored, respectively.

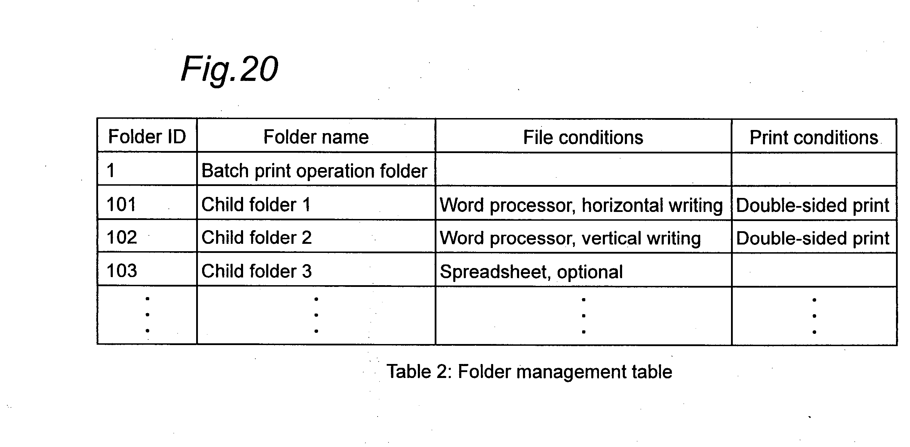

Further, FIG. 20 shows one example of folder management tables. In this folder management table, the batch print operation folder and child folders dependent thereupon are managed in batches, and information concerning a "Folder ID" , a "Folder name", "File conditions" , and " Print conditions" is held for each of the folders. Here, the " Folder ID" is a value for identifying the batch print operation folder and the child folders depending thereupon in the PC 10. Further, both the " File conditions" and the " Print conditions" are information which reflects contents of setting in the child folder setting dialog shown in FIG. 18. When any piece of information is changed in response to an operation by the user, or when a child folder is newly created, deleted or changed in its arrangement inside the window W of the batch print operation folder, the folder management table is updated.

Next, the deletion process (step #48 in FIG. 10) is described with reference to the flowchart shown in FIG. 21. In this process, first, it is determined whether or not an icon to be deleted is a document icon or a white paper insertion icon (#81). As a result, when the icon is determined to be the document icon or the white paper insertion icon, the file management table is updated (#82), and the document icon or the white paper insertion icon is then deleted (#83). After the step #83, the process is returned to the flow shown in FIG. 10.

On the other hand, as a result of #81, when it is determined that the icon to be deleted is not the document icon or the white paper insertion icon, namely the icon to be deleted is a folder, the file management table is updated (#84), and the folder is then deleted (#85). After the step #85, the process is returned to the flow shown in FIG. 10.

As described above, in the present embodiment, the classification storage process is performed in which, when each of document files corresponding to a document icon or each of document files attached to an e-mail, having been dropped into the batch print operation folder, is stored into the batch print operation, the document file is classified by file conditions.

FIG. 22 is a flowchart of the classification storage process (step #38 in FIG. 10) of the document file. In this process, first, information of a document file " i" is acquired (#91). The information of the document file "i" is information representing the type of the document file identifiable from an extension of the document file. Further, for example by opening the document file and reading property information described in a prescribed format in the document file, it is possible to acquire information concerning whether the document file is in horizontal writing pattern or vertical writing pattern.

After the step #91, a child folder number " j" (the number of 1≦ j≦ child folders) is reset to 0 in order to sequentially determine the suitability of the document file for child folders dependent upon the batch print operation folder, (#92). Subsequently, it is determined whether or not the information of the document file acquired in the step #91 agrees with document file conditions previously set in the child folder setting dialog as shown in FIG. 18 in creation of the child folder " j" (#93). As a result, when the information is determined to agree with the document file conditions, a document file icon is created (#98), and the created document icon is stored into the child folder " j" (#99). Thereafter, the process proceeds to a step #100.

On the other hand, when the information is determined not to agree with the document file conditions, 1 is added to the child folder number "j" in order to determine the suitability of the document file for the remaining child folders (#94), and it is further determined whether or not " j" after the addition exceeds the number of child folders (#95). As a result, when " j" after the addition is determined to be not larger than the number of child folders, the process returns to the step #93 in order to determine the suitability of the document file for the remaining child folders, and the subsequent steps are repeated. On the other hand, when " j" after the addition is determined to exceed the number of child folders, it means that the suitability of the document file for all the child folders are determined. Then a document icon is created (#96) and the created document icon is stored into the batch print operation folder (#97). Thereafter, the process proceeds to the step #100.

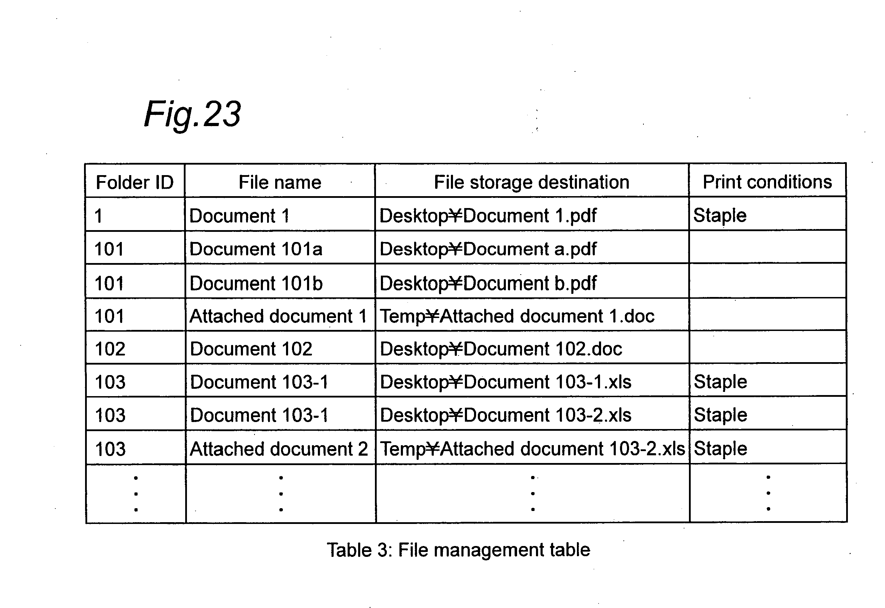

In the step #100, the information of the document file " i" is added to the file management table. At this time, a folder ID of a child folder or the batch print operation folder to store the document file is stored as the item " Folder ID" in the file management table. FIG. 23 shows one example of file management tables in which files to be stored into the batch print operation folder are managed in batches, including a document file to be stored into each of child folders. After the step #100, the process is returned to the flow shown in FIG. 9.

Finally, the print request process (step #20 in FIG. 3) is described with reference to a flowchart of FIG. 24. In this process, first, it is determined whether or not an icon dragged and dropped onto a printer icon is a document icon (#101). As a result, when the icon is determined to be the document icon, print data is created from a document file corresponding to the document icon (#102), and the created print data is transmitted to the image formation apparatus (#103). Thereafter, the process is returned to the flow shown in FIG. 3.

On the other hand, as a result of the step #101, when the icon dragged and dropped onto the printer icon is determined not to be the document icon, it is then determined whether or not the icon is the batch print operation folder (#104). As a result, when the dragged and dropped icon is determined not to be the batch print operation folder, the process is immediately returned to the flow shown in FIG. 3. On the other hand, when the icon is determined to be the batch print operation folder, it is then determined whether or not a document file is present in the batch print operation folder (#105).

As a result of the step #105, when no document file is determined to be present in the batch print operation folder, the process immediately proceeds a step #108. On the other hand, when a document file is determined to be present in the batch print operation folder, print data is created as one print job based upon the document file present in the batch print operation folder (#106). In this step #106, the file management table is referred, and when a plurality of document files are present in the batch print operation folder, print data is created in the print order corresponding to the order in which the files are managed by the file management table.

Further, when a plurality of document files are present in the batch print operation folder, for example, a printer description language (PDL) of the document file can be parted by a UEL command of a printer job language (PJL) to create print data as one print job based upon the plurality of document files. One example of creating print data as one print job based upon document files d1, d2 provided with file names Document 1" " Document 2" is shown.
<ESC>%-12345@PJL<CR><LF>
<ESC>E ... PDL data of Document 1...<ESC>E
<ESC>%-12345X
<ESC>E ... PDL data of Document 2 ... <ESC>E
<ESC>%-12345X

Further, the file management table is referred, and for example when a print condition " Staple needed" is set only for the document file 2, print data can be created as follows.
<ESC>%-12345X@PJL<CR><LF>
<ESC>E ... PDL data of document 1...<ESC>E
<ESC>%-12345X<CR><LF>
@PJL STAPLE=ON<CR><LF>
<ESC>E ... PDL data of document 2 ... <ESC>E
<ESC>%-12345X

After the step #106, the print data as thus created is transmitted to the image formation apparatus corresponding to a printer icon onto which the folder icon is to be dropped (#107). The process then proceeds to a step #108.

In steps #108 to #113, processes are performed in which print data is created from document files stored in a plurality of child folders created in the batch print operation folder, and then transmitted to the image formation apparatus. Specifically, first, a child folder number "j" (the number of 1≦ j≦ child folders) is reset to 0 (#108). Subsequently, it is determined whether or not a document file is present in the child folder j (#109). As a result, when no document file is determined to be present, the process immediately proceeds to the step #112. On the other hand, when the document file is determined to be present, print data is created as one print job based upon the document file stored in the child folder j (#110). In this step #110, when a plurality of document files are present in the child folder, the file management table is referred, and print data is created in the print order corresponding to the order in which the files are managed by the file management table. After the step #110, the created print data is transmitted to any of the image formation apparatuses 20-1, ..., 20-n (#111), and the step proceeds to the step #112.

In the step #112, 1 is added to the child folder number " j" in order to determine whether or not the document file is present in the remaining child folders, and it is further determined whether or not " j" after the addition exceeds the number of child folders (#113). As a result, when " j" after the addition is determined to be not larger than the number of child folders, the process returns to the step #109 for determining the presence of the document file in the remaining child folders, and the subsequent steps are repeated. On the other hand, when " j" after the addition is determined to exceed the number of child folders, it means that the checking all the child folders for the presence of document files is completed. Then, the process is immediately returned to the flow shown in FIG 3.

As thus described, according to the present embodiment, it is possible to create print data as one print job based upon a plurality of files only by drag-and-drop of the operation folder icon F onto the printer icon. Further, in that case, since the arrangement order of icons in the window W of the batch print operation folder is reflected to the print order, it is possible to arbitrarily and easily change the arrangement of icons so as to change the print order of files.

It is possible to arbitrarily and easily set different print conditions for each of a plurality of files. Further, while white paper can be inserted into between print results of the files which are outputted on the image formation apparatus side, it is possible to arbitrarily and easily change a place where white paper is inserted by changing the arrangement order of the white paper insertion icon " s" in the window W of the batch print operation folder.

Moreover, since child folders for storing files respectively corresponding to specific file conditions are created in the batch print operation folder and a print job is set in units of child folders, it is possible to provide a print instruction while files having different file conditions are certainly discriminated from one another. Furthermore, in the present embodiment, when the child folders are created, it is possible to easily allocate the files since the files are automatically classified and stored into the child folders based upon the file conditions corresponding to the file icons in performance of drag-and-drop operations of the file icons onto the operation folder icon.

Each of the foregoing processes represented by the flowcharts is executed by reading a program stored in the PC 10. Such a program may be previously incorporated as part of a program as the basis of control by the CPU 2 in the PC 10, or may be downloaded, for example, with the use of an external recording medium such as an optical disc like a DVD-ROM or a CD-ROM or a floppy disc, or via the network, to be additionally stored into the PC 10.

In addition, it goes without saying that the present invention is not limited to the exemplified embodiments, and a variety of modifications and changes in design can be devised without departing from the invention as described in the independent claims.

While a variety of files stored inside the batch print operation folder are treated as one print job in the foregoing embodiments, as conventionally known, it is also possible to set a folder in which each of files are separately treated in the print instruction program in provision of a print instruction.

## Claims

1. An information processor (10), which is connected to an image formation apparatus (20-1,...,20-n), arranged to provide a print instruction to the image formation apparatus, and comprises the function of creating print data on a user interface screen based upon prescribed files in response to a drag and drop operation of a folder icon (F) corresponding to a folder that stores said files onto a printer icon (m1, m2) corresponding to the image formation apparatus, **characterized in that** the information processor comprises:
a file manager arranged to manage, while ordering, a plurality of files based upon a prescribed order of the file icons inside a window (W) of the folder;
an attached file acquirer arranged to acquire a file attached to an e-mail in response to a drag and drop operation or a copy and paste operation of an e-mail icon corresponding to the e-mail onto the folder icon;
a file memory arranged to store the file acquired by the attached file acquirer into the folder corresponding to the folder icon (F); and
a print data creator arranged to create print data of the plurality of files as one print job in the print order corresponding to the order in which the files are managed by the file manager in response to the drag and drop operation of the folder icon (F) onto the printer icon (m1, m2).

2. The information processor (10) according to claim 1, further comprising a print condition setter arranged to set print conditions for each of the files stored inside the folder,
wherein the print data creator is arranged to create print data such that the print conditions set for each of the files are reflected to a print result of each of the files which is outputted on the image formation apparatus side.

3. The information processor (10) according to claim 2,
wherein at least the necessity/unnecessity of a staple is included in the print conditions set for each of the icons.

4. The information processor according to any of claims 1 to 3, further comprising a white paper insertion icon creator arranged to create a white paper insertion icon for inserting white paper into between print results of the files which are outputted on the image formation apparatus side according to a user instruction, wherein
the file manager is arranged to manage, while ordering, the files and the white paper based upon a prescribed order of the file icons and the white paper icon (S) inside a window (W) of the folder according to creation of the white paper insertion icon by the white paper insertion icon creator, and meanwhile
the print data creator is arranged to create print data such that the white paper is inserted into between the print results of the files in the order in which the white paper is managed along with the files by the file manager.

5. The information processor according to any of claims 1 to 4, wherein the prescribed order is the order in which the file icons are arranged inside the window (W) of the folder.

6. The information processor according to any of claims 1 to 5, further comprising a child folder creator arranged to create one or more child folders each of which is dependent upon the folder and stores one or more files, wherein
the print data creator is arranged to create print data of the files, which are stored inside each of the child folders, as one print job in units of each of the child folders.

7. The information processor according to claim 6, comprising:
a file condition setter arranged to set a file condition for classifying the file for each of the child folders; and
a file classifying memory arranged to classify and store the file into the folder or at least one child folder dependent upon the folder based upon file conditions set for the child folder in response to a drag and drop operation or a copy and paste operation of a file icon corresponding to the file onto a folder icon corresponding to the folder.

8. The information processor according to claim 6 or 7, further comprising a print condition setter arranged to set print conditions for each of the child folders, wherein the print data creator is arranged to create print data such that the print conditions set for each of the child folders are reflected to a print result of a file stored inside each of the child folders which is outputted on the image formation apparatus side.

9. The information processor according to claim 7, wherein the file classifying memory is arranged to classify a file acquired by the attached file acquirer and is arranged to store the file into the folder or at least one child folder dependent upon the folder based upon the file conditions set for the child folder.

10. A print instruction method for making an information processor (10), which is connected to an image formation apparatus (20-1,...,20-n), arranged to provide a print instruction to the image formation apparatus, and comprises the function of creating print data on a user interface screen based upon prescribed files in response to a drag and drop operation of a folder icon (F) corresponding to a folder that stores said files onto a printer icon (m1, m2) corresponding to the image formation apparatus, execute the steps of:
managing, while ordering, a plurality of files based upon a prescribed order of the file icons inside a window (W) of the folder;
acquiring a file attached to an e-mail in response to a drag and drop operation or a copy and paste operation of an e-mail icon corresponding to the e-mail onto the folder icon;
storing the said acquired file into the folder corresponding to the folder icon; and
creating print data of the plurality of files as one print job in the print order corresponding to the order in which the files are managed in response to the drag and drop operation of the folder icon (F) onto the printer icon (m1, m2).

11. A computer-readable recording medium in which a print instruction program is recorded, the program arranged to make an information processor (10), which is connected to an image formation apparatus (20-1,...,20-n), provide a print instruction to the image formation apparatus, and comprises the function of creating print data on a user interface screen based upon prescribed files in response to a drag and drop operation of a folder icon (F) corresponding to a folder that stores said files onto a printer icon (m1, m2) corresponding to the image formation apparatus, execute the procedures of:
managing, while ordering, the files based upon a prescribed order of the file icons inside a window (W) of the folder;
acquiring a file attached to an e-mail in response to a drag and drop operation or a copy and paste operation of an e-mail icon corresponding to the e-mail onto the folder icon;
storing the said acquired file into the folder corresponding to the folder icon; and
creating print data of the plurality of files as one print job in the print order corresponding to the order in which the files are managed in response to the drag and drop operation of the folder icon (F) onto the printer icon (m1, m2).

## Patentansprüche

1. Ein Informationsprozessor (10), welcher mit einer Bildformierungsvorrichtung (20-1,..., 20-n) verbunden ist, angeordnet zum Bereitstellen einer Druckanweisung an die Bildformierungsvorrichtung, und die Funktionen zum Erzeugen von Druckdaten an einem Anwenderschnittstellenbildschirm basierend auf vorgeschriebenen Dateien in Reaktion auf eine Drag-und-Drop-Operation eines Ordnersymbols (F), welches zu einem Ordner gehört, welcher die Dateien speichert, auf ein Druckersymbol (m1, m2), welches zu der Bildformierungsvorrichtung gehört, umfasst, **dadurch gekennzeichnet, dass** der Informationsprozessor umfasst:
einen Dateimanager, angeordnet zum Verwalten, während einem Ordnen, einer Vielzahl von Dateien basierend auf einer vorgeschriebenen Reihenfolge der Dateisymbole innerhalb eines Fensters (W) des Ordners;
eine Anhangsdatei-Erfassungseinheit, angeordnet zum Erfassen einer an eine E-Mail angehängten Datei in Reaktion auf eine Drag-und-Drop-Operation oder eine Copy-und-Paste-Operation eines E-Mail-Symbols, welches zu der E-Mail gehört, auf das Ordnersymbol;
einen Dateispeicher, angeordnet zum Speichern der durch die Anhangsdatei-Erfassungseinheit erfassten Datei in dem zu dem Ordnersymbol (F) gehörenden Ordner; und
eine Druckdatei-Erzeugungseinheit, angeordnet zum Erzeugen von Druckdaten der Vielzahl von Dateien als ein Druckauftrag in der Druckreihenfolge, welche zu der Reihenfolge gehört, in welcher die Dateien durch den Datei-Manager verwaltet werden, in Reaktion auf die Drag-und Drop-Operation des Ordnersymbols (F) auf das Druckersymbol (m1, m2).

2. Informationsprozessor (10) gemäß Anspruch 1, weiter umfassend eine Druckbedingung-Einstelleinheit, angeordnet zum Einstellen von Druckbedingungen für eine jede der in dem Ordner gespeicherten Dateien,
wobei die Druckdateien-Erzeugungseinheit zum Erzeugen von Druckdateien derart angeordnet ist, dass die Druckerbedingungen, welche für eine jede der Dateien eingestellt sind, zu einem Druckergebnis einer jeden der Dateien wiedergegeben werden, welche auf der Seite der Bildformierungsvorrichtung ausgegeben werden.

3. Informationsprozessor (10) gemäß Anspruch 2, wobei zumindest die Notwendigkeit/Nicht-Notwendigkeit einer Klammer in den für ein jedes der Symbole eingestellten Druckbedingungen umfasst ist.

4. Informationsprozessor gemäß einem der Ansprüche 1 bis 3, weiter umfassend eine Weißes-Papier-Einfügungssymbol-Erzeugungseinheit, angeordnet zum Erzeugen eines Weißes-Papier-Einfügungssymbol zum Einfügen eines weißen Papiers zwischen Druckergebnissen der Dateien, welche auf der Seite der Bildformierungsvorrichtung ausgegeben werden, entsprechend einer Anwenderanweisung, wobei
der Dateimanager angeordnet ist, während einem Ordnen, die Dateien und das weiße Papier basierend auf einer vorgeschriebenen Reihenfolge der Dateisymbole und dem Weißes-Papier-Symbol (S) innerhalb eines Fensters (W) des Ordners entsprechend einer Erzeugung des Weißes-Papier-Einfügungssymbol durch die Weißes-Papier-Einfügungssymbol-Erzeugungseinheit zu verwalten, und indessen
die Druckdaten-Erzeugungseinheit angeordnet ist, Druckdaten so zu erzeugen, dass das weiße Papier zwischen den Druckergebnissen der Dateien in der Reihenfolge eingefügt wird, in welcher das weiße Papier zusammen mit den Dateien durch den Dateimanager verwaltet wird.

5. Informationsprozessor gemäß einem der Ansprüche 1 bis 4, wobei die vorgeschriebene Reihenfolge die Reihenfolge ist, bei welcher die Dateisymbole innerhalb des Fensters (W) des Ordners angeordnet sind.

6. Informationsprozessor gemäß einem der Ansprüche 1 bis 5, weiter umfassend eine Unterordner-Erzeugungseinheit, angeordnet zum Erzeugen von einem oder mehreren Unterordnern, welche jeweils von dem Ordner abhängen und eine oder mehrere Dateien speichern, wobei
die Druckdaten-Erzeugungseinheit angeordnet ist, Druckdaten der Dateien, welche innerhalb eines jeden der Unterordner gespeichert sind, als ein Druckauftrag in Einheiten eines jeden der Unterordner zu erzeugen.

7. Informationsprozessor gemäß Anspruch 6, umfassend:
eine Dateibedingung-Einstelleinheit, angeordnet zum Einstellen einer Dateibedingung zum Klassifizieren der Datei für einen jeden der Unterordner; und
einen Dateiklassifizierungsspeicher, angeordnet zum Klassifizieren und Speichern der Datei in dem Ordner oder zumindest einem Unterordner in Abhängigkeit von dem Ordner basierend auf für den Unterordner eingestellten Dateibedingungen in Reaktion auf eine Drag-und-Drop-Operation oder eine Copy-und-Paste-Operation eines zu der Datei gehörenden Dateisymbols auf ein zu dem Ordner gehörendes Ordnersymbol.

8. Informationsprozessor gemäß Anspruch 6 oder 7, weiter umfassend eine Druckbedingung-Einstelleinheit, angeordnet zum Einstellen von Druckbedingungen für einen jeden der Unterordner, wobei die Druckdaten-Erzeugungseinheit angeordnet ist, Druckdaten so zu erzeugen, dass die für einen jeden der Unterordner eingestellten Druckbedingungen auf ein Druckergebnis eine innerhalb eines jeden der Unterordner gespeicherten Datei wiedergegeben werden, welche auf der Seite der Bildformierungsvorrichtung ausgegeben wird.

9. Informationsprozessor gemäß Anspruch 7, wobei der Dateiklassifizierungsspeicher angeordnet ist, eine durch die Anhangsdatei-Erfassungseinheit erfasste Datei zu klassifizieren, und angeordnet ist, die Datei in den Ordner oder zumindest einen Unterordner in Abhängigkeit von dem Ordner basierend auf den für den Unterordner eingestellten Dateibedingungen zu speichern.

10. Ein Druckanweisungsverfahren zum Veranlassen eines Informationsprozessors (10), welcher mit einer Bildformierungsvorrichtung (20-1,..., 20-n) verbunden ist, angeordnet zum Bereitstellen einer Druckanweisung an die Bildformierungsvorrichtung, und die Funktion zum Erzeugen von Druckdaten auf einem Anwenderschnittstellenbildschirm basierend auf vorgeschriebenen Dateien in Reaktion auf eine Drag-und Drop-Operation eines Ordnersymbols (F), welches zu einem Ordner gehört, welcher die Dateien speichert, auf ein Druckersymbol (m1, m2), welches zu der Bildformierungsvorrichtung gehört, umfasst, die Schritte ausführt:
Verwalten, während einem Ordnen, einer Vielzahl von Dateien basierend auf einer vorgeschriebenen Reihenfolge der Dateisymbole innerhalb eines Fensters (W) des Ordners;
Erfassen einer an eine E-Mail angehängten Datei in Reaktion auf eine Drag-und-Drop-Operation oder eine Copy-und-Paste-Operation eines zu der E-Mail gehörenden E-Mail-Symbols auf das Ordnersymbol;
Speichern der erfassten Datei in dem zu dem Ordnersymbol gehörenden Ordner; und
Erzeugen von Druckdaten der Vielzahl von Dateien als ein Druckauftrag in der Druckreihenfolge, welche zu der Reihenfolge gehört, in welcher die Dateien verwaltet werden, in Reaktion auf die Drag-und-Drop-Operation des Ordnersymbols (F) auf das Druckersymbol (m1, m2).

11. Ein computerlesbares Speichermedium, in welchem ein Druckanweisungsprogramm gespeichert ist, wobei das Programm angeordnet ist, einen Informationsprozessor (10), welcher mit einer Bildformierungsvorrichtung (20-1,..., 20-n) verbunden ist, zu veranlassen eine Druckanweisung an die Bildformierungsvorrichtung bereitzustellen, und die Funktion zum Erzeugen von Druckdaten auf einem Anwenderschnittstellenbildschirm basierend auf vorgeschriebenen Dateien in Reaktion auf eine Drag-und-Drop-Operation eines Ordnersymbols (F), welches zu einem Ordner gehört, welcher die Dateien speichert, auf ein Druckersymbol (m1, m2), welches zu der Bildformierungsvorrichtung gehört, umfasst, die Vorgänge ausführt:
Verwalten, während einem Ordnen, der Dateien basierend auf einer vorgeschriebenen Reihenfolge der Dateisymbole innerhalb eines Fensters (W) des Ordners;
Erfassen einer an eine E-Mail angehängten Datei in Reaktion auf eine Drag-und-Drop-Operation oder eine Copy-und-Paste-Operation eines zu der E-Mail gehörenden E-Mail-Symbols auf das Ordnersymbol;
Speichern der erfassten Datei in dem zu dem Ordnersymbol gehörenden Ordner; und
Erzeugen von Druckdaten der Vielzahl von Dateien als ein Druckauftrag in der Druckreihenfolge, welche zu der Reihenfolge gehört, in welcher die Dateien verwaltet sind, in Reaktion auf die Drag-und-Drop-Operation des Ordnersymbols (F) auf das Druckersymbol (m1, m2).

## Revendications

1. Processeur d'informations (10), qui est connecté à un appareil de formation d'image (20-1, ..., 20-n), agencé pour fournir une instruction d'impression à l'appareil de formation d'image, et comprend la fonction de création de données d'impression sur un écran d'interface utilisateur sur la base de fichiers prescrits en réponse à une opération glisser-déposer d'une icône de dossier (F) correspondant à un dossier qui stocke lesdits fichiers sur une icône d'imprimante (m1, m2) correspondant à l'appareil de formation d'image, **caractérisé en ce que** le processeur d'informations comprend :
un gestionnaire de fichier agencé pour gérer, tout en ordonnant, une pluralité de fichiers sur la base d'un ordre prescrit des icônes de fichier à l'intérieur d'une fenêtre (W) du dossier ;
un acquéreur de fichier joint agencé pour acquérir un fichier joint à un courriel en réponse à une opération glisser-déposer ou une opération copier-coller d'une icône de courriel correspondant au courriel sur l'icône de dossier ;
une mémoire de fichier agencée pour stocker le fichier acquis par l'acquéreur de fichier joint dans le dossier correspondant à l'icône de dossier (F) ; et
un créateur de données d'impression agencé pour créer des données d'impression de la pluralité de fichiers comme un travail d'impression dans l'ordre d'impression correspondant à l'ordre dans lequel les fichiers sont gérés par le gestionnaire de fichier en réponse à l'opération glisser-déposer de l'icône de dossier (F) sur l'icône d'imprimante (m1, m2).

2. Processeur d'informations (10) selon la revendication 1, comprenant en outre un dispositif d'établissement de condition d'impression agencé pour établir des conditions d'impression pour chacun des fichiers stockés à l'intérieur du dossier,
dans lequel le créateur de données d'impression est agencé pour créer des données d'impression de sorte que les conditions d'impression établies pour chacun des fichiers soient reflétées vers un résultat d'impression de chacun des fichiers qui est sorti du côté de l'appareil de formation d'image.

3. Processeur d'informations (10) selon la revendication 2, dans lequel au moins la nécessité/non-nécessité d'une agrafe est incluse dans les conditions d'impression établies pour chacune des icônes.

4. Processeur d'informations selon l'une quelconque des revendications 1 à 3, comprenant en outre un créateur d'icône d'insertion de papier blanc agencé pour créer une icône d'insertion de papier blanc pour insérer un papier blanc entre des résultats d'impression des fichiers qui sont sortis du côté de l'appareil de formation d'image selon une instruction d'utilisateur, où
le gestionnaire de fichier est agencé pour gérer, tout en ordonnant, les fichiers et le papier blanc sur la base d'un ordre prescrit des icônes de fichier et de l'icône de papier blanc (S) à l'intérieur d'une fenêtre (W) du dossier selon la création de l'icône d'insertion de papier blanc par le créateur d'icône d'insertion de papier blanc, et dans l'intervalle
le créateur de données d'impression est agencé pour créer des données d'impression de sorte que le papier blanc soit inséré entre les résultats d'impression des fichiers dans l'ordre dans lequel le papier blanc est géré avec les fichiers par le gestionnaire de fichier.

5. Processeur d'informations selon l'une quelconque des revendications 1 à 4, dans lequel l'ordre prescrit est l'ordre dans lequel les icônes de fichier sont agencées à l' intérieur de la fenêtre (W) du dossier.

6. Processeur d'informations selon l'une des revendications 1 à 5, comprenant en outre un créateur de dossier enfant agencé pour créer un ou plusieurs dossiers enfants dont chacun est dépendant du dossier et stocke un ou plusieurs fichiers, où
le créateur de données d'impression est agencé pour créer des données d'impression des fichiers, qui sont stockés à l'intérieur de chacun des dossiers enfants, comme un travail d'impression en unités de chacun des dossiers enfants.

7. Processeur d'informations selon la revendication 6, comprenant :
un dispositif d'établissement de condition de fichier agencé pour établir une condition de fichier pour classer le fichier pour chacun des dossiers enfants ; et
une mémoire de classement de fichier agencée pour classer et stocker le fichier dans le dossier ou au moins un dossier enfant dépendant du dossier sur la base de conditions de fichier établies pour le dossier enfant en réponse à une opération glisser-déposer ou une opération copier-coller d'une icône de fichier correspondant au fichier sur une icône de dossier correspondant au dossier.

8. Processeur d'informations selon la revendication 6 ou 7, comprenant en outre un dispositif d'établissement de condition d'impression agencé pour établir des conditions d'impression pour chacun des dossiers enfants,
dans lequel le créateur de données d'impression est agencé pour créer des données d'impression de sorte que les conditions d'impression établies pour chacun des dossiers enfants soient reflétées vers un résultat d'impression d'un fichier stocké à l'intérieur de chacun des dossiers enfants qui est sorti du côté de l'appareil de formation d'image.

9. Processeur d'informations selon la revendication 7, dans lequel la mémoire de classement de fichier est agencée pour classer un fichier acquis par l'acquéreur de fichier joint et est agencée pour stocker le fichier dans le dossier ou au moins un dossier enfant dépendant du dossier sur la base des conditions de fichier établies pour le dossier enfant.

10. Procédé d'instruction d'impression pour amener un processeur d'informations (10), qui est connecté à un appareil de formation d'image (20-1, ..., 20-n), agencé pour fournir une instruction d'impression à l'appareil de formation d'image, et comprend la fonction de création de données d'impression sur un écran d'interface utilisateur sur la base de fichiers prescrits en réponse à une opération glisser-déposer d'une icône de dossier (F) correspondant à un dossier qui stocke lesdits fichiers sur une icône d'imprimante (m1, m2) correspondant à l'appareil de formation d'image, à exécuter les étapes consistant à :
gérer, tout en ordonnant, une pluralité de fichiers sur la base d'un ordre prescrit des icônes de fichier à l'intérieur d'une fenêtre (W) du dossier ;
acquérir un fichier joint à un courriel en réponse à une opération glisser-déposer ou une opération copier-coller d'une icône de courriel correspondant au courriel sur l'icône de dossier ;
stocker ledit fichier acquis dans le dossier correspondant à l'icône de dossier ; et
créer des données d'impression de la pluralité de fichiers comme un travail d'impression dans l'ordre d'impression correspondant à l'ordre dans lequel les fichiers sont gérés en réponse à l'opération glisser-déposer de l'icône de dossier (F) sur l'icône d'imprimante (m1, m2).

11. Support d'enregistrement lisible par ordinateur dans lequel un programme d'instruction d'impression est enregistré, le programme agencé pour amener un processeur d'informations (10), qui est connecté à un appareil de formation d'image (20-1, ..., 20-n), pour fournir une instruction d'impression à l'appareil de formation d'image, et comprend la fonction de création de données d'impression sur un écran d'interface utilisateur sur la base de fichiers prescrits en réponse à une opération glisser-déposer d'une icône de dossier (F) correspondant à un dossier qui stocke lesdits fichiers sur une icône d'imprimante (m1, m2) correspondant à l'appareil de formation d'image, à exécuter les procédures consistant à :
gérer, tout en ordonnant, les fichiers sur la base d'un ordre prescrit des icônes de fichier à l'intérieur d'une fenêtre (W) du dossier ;
acquérir un fichier joint à un courriel en réponse à une opération glisser-déposer ou une opération copier-coller d'une icône de courriel correspondant au courriel sur l'icône de dossier ;
stocker ledit fichier acquis dans le dossier correspondant à l'icône de dossier ; et
créer des données d'impression de la pluralité de fichiers comme un travail d'impression dans l'ordre d'impression correspondant à l'ordre dans lequel les fichiers sont gérés en réponse à l'opération glisser-déposer de l'icône de dossier (F) sur l'icône d'imprimante (ml, m2).
